# EUROPÄISCHE PATENTSCHRIFT

(11) **EP 1 410 933 B1**
(45) Veröffentlichungstag und Bekanntmachung des Hinweises auf die Patenterteilung: **09.03.2005**
(21) Anmeldenummer: 03019793.3
(22) Anmeldetag: 30.08.2003
(51) Int. Cl.: B60J 5/04

(54) **Fahrzeugtür, insbesondere Kraftfahrzeugtür**
Vehicle door, in particular motor vehicle door
Porte de véhicule, en particulier porte de véhicule à moteur

(30) Priorität: 17.10.2002 DE 10248405
(43) Veröffentlichungstag der Anmeldung: 21.04.2004
(73) Patentinhaber: AUDI AG, 85045 Ingolstadt (DE)
(72) Erfinder: Bönsel, Jürgen, 85113 Böhmfeld (DE); Topp, Gerhard, 85051 Ingolstadt (DE)
(74) Vertreter: Patzelt, Heike

(56) Entgegenhaltungen:
- EP-A- 0 779 171
- US-A- 6 135 537
- US-B1- 6 382 707

## Beschreibung

Die Erfindung betrifft eine Fahrzeugtür, insbesondere eine Kraftfahrzeugtür nach dem Oberbegriff des Anspruchs 1.

Eine bekannte gattungsgemäße Kraftfahrzeugtür (DE 92 06 926 U1) weist einen in der Fahrzeugtür angeordneten biegesteifen Aufprallträger auf, der sich von einem scharnierseitigen Türbereich bis in einen schlossseitigen Türbereich der Fahrzeugtür erstreckt. Weiter ist eine scharnierseitige Befestigungsvorrichtung zur Anbindung eines zugeordneten scharnierseitigen Trägerendbereichs und eine feste Trägerverbindung eines schlossseitigen Trägerendbereichs mit jeweils einem Türkastenteil vorgesehen.

Konkret erfolgt hier die Anbindung der beiden Aufprallträgerenden mittels einer Verschraubung am Innenblech oder Außenblech eines Türkastens. Der Aufprallträger ist dabei als Nachrüstteil zweiteilig ausgebildet, in seiner Längserstreckung einstellbar und an die jeweiligen Gegebenheiten unterschiedlicher Fahrzeugtüren anpassbar. Der Aufprallträger wird nachträglich bei abgenommener Türinnenverkleidung verspannungsfrei angebracht und hat ausschließlich die Funktion einer Türkastenverstärkung gegenüber einem Seitenaufprall.

Allgemein soll nach der Montage eine Fahrzeugtüraußenhaut bündig und mit einem gleichmäßigen Fugenbild zwischen der Tür und angrenzendem Türausschnitt justiert sein. Dies ist in der Regel durch eine hohe Fertigungsgenauigkeit der Fahrzeugtüren und der angrenzenden Karosserieteile gegeben und/oder durch Einstellmittel an den Scharnieren erreichbar. Dennoch weisen in der Serienfertigung einige Fahrzeugtüren Verdrehungen auf, die dazu führen, dass sie nach der Montage nicht außenhautbündig an die angrenzenden Karosserieteile, z. B. an einen Seitenwandrahmen oder bei viertürigen Fahrzeugen an die hintere Türe anschließen. So kann beispielsweise ein schlossseitiger Fahrzeugtürbereich gegenüber der gewünschten Lage verdreht sein, dergestalt, dass ein in Türhochrichtung gesehener oberer schlossseitiger Türkantenbereich gegenüber der gewünschten Normallage nach außen und entsprechend umgekehrt ein unterer Türkantenrandbereich gegenüber der gewünschten Normallage nach innen verdreht ist. Ebenso kann eine Verdrehung in genau umgekehrter Weise vorliegen.

Um hier die erforderliche Außenhautbündigkeit herzustellen wird üblicherweise ein Richtvorgang durchgeführt, wobei manuell mit erheblicher Krafteinwirkung die Fahrzeugtür in eine außenhautbündige Stellung bleibend verdreht wird. Dieser Richtvorgang ist insofern kritisch und schwierig als die Fahrzeugtür zunächst über den elastischen Bereich in den plastischen Bereich gedrückt werden muss und erst nach dem Absetzen des Werkzeugs das Ergebnis kontrolliert werden kann, wobei ggf. mehrere Versuche erforderlich sind. Ersichtlich besteht hier die Gefahr, dass durch zu große Krafteinwirkung die Tür zu weit verdreht wird und damit die Außenhautbündigkeit aus der anderen Richtung fehlt. Eine genaue Ausrichtung einer solchen Tür ist somit schwierig, zeitaufwändig und nur von einem geübten Werker durchführbar.

Weiter ist zur Ausrichtung einer im vorstehenden Sinne verdrehten Fahrzeugtür aus der DE 199 27 926 A1 eine längsverstellbare Strebe bekannt, die sich als Stab von einem oberen Scharnierseitenbereich in einen unteren scharnierfemen Schlossseitenbereich eines Türkastens erstreckt. Die Strebe ist am scharnierfernen Ende mit einem Strebenende ortsfest angebracht. Das Strebenende im Scharnierbereich umfasst dagegen eine Stellschraube für eine Längsverstellung, so dass der Relativabstand der beiden Strebenanbindungspunkte an der Tür über die längenverstellbare Strebe veränderbar ist. Dadurch können in der Tür Verspannungskräfte erzeugt werden, die eine Verformung der Tür bewirken können. Eine Strebenlängsverstellung ist jedoch konstruktiv relativ aufwändig. Zudem ist hier eine Verspannungskraftaufbringung durch eine Strebenlängenänderung im Wesentlichen nur in Türlängsrichtung durchführbar, so dass eine Einwirkung auf eine Türverdrehung nur unzureichend oder nur mit erheblichen Verspannkräften möglich ist. Zudem erhöht eine Einstellstrebe, die nur für den Zweck einer Türeinstellung verwendet wird als zusätzliches Bauteil in ungünstiger Weise den Preis und das Gewicht einer Fahrzeugtür.

Aufgabe der Erfindung ist es eine gattungsgemäße Kraftfahrzeugtür so weiterzubilden, dass eine Türausrichtung, insbesondere eine Ausrichtung einer Türverdrehung mit einfachen und kostengünstigen Mitteln möglich ist.

Diese Aufgabe wird mit den Merkmalen des Anspruchs 1 gelöst.

Gemäß Anspruch 1 umfasst die scharnierseitige Befestigungsvorrichtung eine etwas senkrecht zur Türfläche ausgerichtete und mit einem Türkastenteil fest verbundene Schwenkachse, an der der Aufprallträger als Hebel in einem Einstellbereich schwenkbar gelagert ist. Zudem weist die scharnierseitige Befestigungsvorrichtung eine Verstelleinrichtung auf, mit einem Einstellelement, das sich einerseits an einem Türkastenteil fest abstützt und andererseits mit dem Aufprallträger für eine Schwenkverstellung und Schwenklagefixierung verbunden ist. Bei einer Schwenkverstellung des Aufprallträgers wird durch die Hebelwirkung des im Wesentlichen biegesteifen Aufprallträgers über die schlossseitige feste Trägerverbindung eine Verspannung und ein Verspannweg im Türkasten und damit an der Türaußenhaut erzeugt, wodurch eine gezielte Türjustierung durch Beeinflussung einer Türverdrehung möglich ist.

Aufgrund der Hebel- und Achsanordnung tritt an der schlossseitigen festen Trägerverbindung im Wesentlichen eine Stellkraftwirkung in Z-Richtung (der senkrechten Richtung) in der Türebene auf. Die Fahrzeugtür ist im Bereich eines stabilen Schamierträgers und durch die Scharnieranbindung verwindungssteif, wobei im Scharnierbereich die Türjustierung durch Einstellelemente an den Scharnieren durchführbar ist. Aufgrund der scharnierseitigen Stabilität und stabilen Anbindung der Fahrzeugtür ergibt sich bei einem Zug nach außen am schlossseitigen unteren Türbereich eine Bewegung des oberen schlossseitigen Fensterrahmenrandes zur Fahrzeuginnenseite. Umgekehrt ergibt ein Druck nach innen auf die untere scharnierseitige Türecke eine gegenläufige Verstellung nach außen der scharnierseitigen oberen Fensterrahmenecke. Bei beiden gegenläufigen Krafteinwirkungen bleibt jedoch ein etwa mittlerer scharnierseitiger Randbereich in Höhe des Türschlosses etwa unverändert in einer Neutrallage. Aufgrund dieser Erkenntnis und durch die stets vorhandene Bombierung einer Fahrzeugtür ist regelmäßig die vorstehend angegebene Kraftwirkung in Z-Richtung geeignet durch eine Verspannung eine Türverdrehung in Kombination mit einer Absenkung oder Anhebung im Bereich der festen Trägerverbindung zu erreichen. Durch eine Fixierung der bei einer Verdrehungsjustierung eingebrachten Verspannung ist eine einfache und dauerhafte Türeinstellung bei einer erforderlichen Verdrehungskorrektur möglich.

Vorteilhaft wird hier der Aufprallträger in einer Doppelfunktion einerseits als Sicherheitselement bei einem Aufprall und andererseits als Bestandteil der Einstellvorrichtung für eine Türjustierung verwendet.

Die Lage des Aufprallträgers sowie der Schwenkachse und der Verstelleinrichtung sind den jeweiligen Gegebenheiten einer konkreten Fahrzeugtür anzupassen, um sowohl eine geeignete Sicherheitsfunktion als auch Einstellfunktion zu erhalten. Falls durch die oben genannte Kraftwirkung in Z-Richtung bei einer konkret vorliegenden Aufbaugeometrie des Türkastens eine unzureichende Kraftkomponente für eine Verdrehjustierung erzeugt wird, kann dem durch eine Schräglage des Aufprallträgers im Türkasten und/oder durch eine Schrägstellung der Schwenkachse gegenüber einer Senkrechten auf die Türfläche abgeholfen werden. Durch eine solche Schräglage des Aufprallträgers bzw. einer Schrägstellung der Schwenkachse tritt bei einer Hebelverstellung zwangsläufig zu einer Verstellkomponente in Z-Richtung auch eine Verstellkomponente in Y-Richtung (in Fahrzeugquerrichtung) auf, die dann eine Änderung der Türverdrehung bewirkt.

Grundsätzlich ist für die erfindungsgemäße Einstellfunktion auch eine einseitige Hebelanordnung möglich, wobei ein Einstellelement zwischen der Schwenkachse und der schlossseitigen festen Trägerverbindung am Aufprallträger angreift. Konstruktiv günstiger mit verbesserter Zugänglichkeit zum Einstellelement ist jedoch meist eine zweiseitige Hebelanordnung gemäß Anspruch 2, wobei die Schwenkachse versetzt zum schlossseitigen Trägerende angebracht ist und das Einstellelement mit dem schlossseitigen Trägerende verbunden ist.

In einer besonders einfachen und preisgünstigen Ausführung nach Anspruch 3 ist der Aufprallträger etwa geradlinig, vorzugsweise aus einem LeichtmetallStrangprofil gebildet, wobei der Aufprallträger von der Schwenkachse in Scharnierrichtung mit einem Teilbereich als kurzem Hebelarm geführt ist und am Ende des kurzen Hebelarms das Einstellelement eingreift. Bei dieser Anordnung ist als Verstelleinrichtung besonders eine selbsthemmende Spindelvorrichtung nach Anspruch 4 geeignet mit einer etwa senkrecht ausgerichteten Stellschraube als Einstellelement mit nach unten weisendem Werkzeugansatz. Das Widerlager als Mutternteil für die Stellschraube kann unterhalb des Aufprallträgers fest im Türkasten angebracht sein, wobei ein Spindelkopf an der Stellschraube formschlüssig in ein Profil des Aufprallträgers für eine Verstellung in Z-Richtung eingreifen kann. In einem unter der Stellschraube bzw. deren Werkzeugansatz liegenden Türblech kann für eine Einführung eines Einstellwerkzeugs ein Durchbruch vorgesehen sein, der nach der Einstellung dicht verschlossen werden kann.

In einer alternativen Ausführung und Anordnung des Aufprallträgers kann dieser gemäß Anspruch 5 als Winkelhebel ausgebildet sein. Dabei steht der Aufprallträger ausgehend vom Schwenkachsenbereich nach oben mit einem Teilbereich als kurzem Hebelarm ab, an dessen Ende die Verbindung zum Einstellelement hergestellt ist. Durch diese Winkelhebelausbildung kann das Einstellelement mit einer Krafteinleitung in X-Richtung (Fahrzeuglängsrichtung) angeordnet werden, wodurch weitere konstruktive Freiräume geschaffen sind. Eine besonders kompakte und einfach einstellbare Anordnung ergibt sich dabei nach Anspruch 6 mit einer Krafteinleitung in X-Richtung mittels einer Exzentervorrichtung. Dabei wird ein verdrehbares Exzenterelement als Einstellelement verwendet, dessen Exzenterachse etwa senkrecht zur Türebene verläuft und welches einen vorzugsweise von der Türinnenseite her zugänglichen Werkzeugansatz aufweist. Die Exzentereinstellung kann nach erfolgter Türjustierung beispielsweise durch eine Fixierschraube festgelegt werden.

Je nach den unterschiedlichen Gegebenheiten an einem Fahrzeug kann der Aufprallträger nach Anspruch 7 etwa horizontal im unteren Drittel des Türkastens angeordnet sein oder sich von einem scharnierseitig höheren Bereich zu einem schlossseitig unteren Bereich erstrecken. Für beide Lagen von Aufprallträgern ist die erfindungsgemäße Vorrichtung zur Türverdrehungsjustierung gleichermaßen geeignet.

Anhand einer Zeichnung wird die Erfindung näher erläutert.

Es zeigen:
- Fig. 1: eine schematische Seitenansicht eines Kraftfahrzeuges im Bereich einer vorderen Fahrzeugtür und einer daran anschließenden hinteren Fahrzeugtür,
- Fig. 2: eine schematische Schnittdarstellung durch die Fahrzeugtüren mit Blickrichtung des Pfeiles aus Fig. 1,
- Fig. 3: eine schematische Schnittdarstellung des Schnittes A-A von Fig. 2,
- Fig. 4: eine schematische Schnittdarstellung des Schnittes B-B von Fig. 2,
- Fig. 5: eine schematische Schnittdarstellung des Schnittes C-C von Fig. 2,
- Fig. 6: eine schematische Seitenansicht der vorderen Fahrzeugtür,
- Fig. 7: eine schematische Darstellung einer Vergrößerung der Einzelheiten R und S von Fig. 6,
- Fig. 8: eine schematische Seitenansicht einer alternativen Ausführung einer vorderen Fahrzeugtür,
- Fig. 9: eine schematische Darstellung einer Vergrößerung der Einzelheit T von Fig. 8 bei umgedrehter Blickrichtung, und
- Fig. 10: eine schematische Schnittdarstellung des Schnittes D-D von Fig. 7.

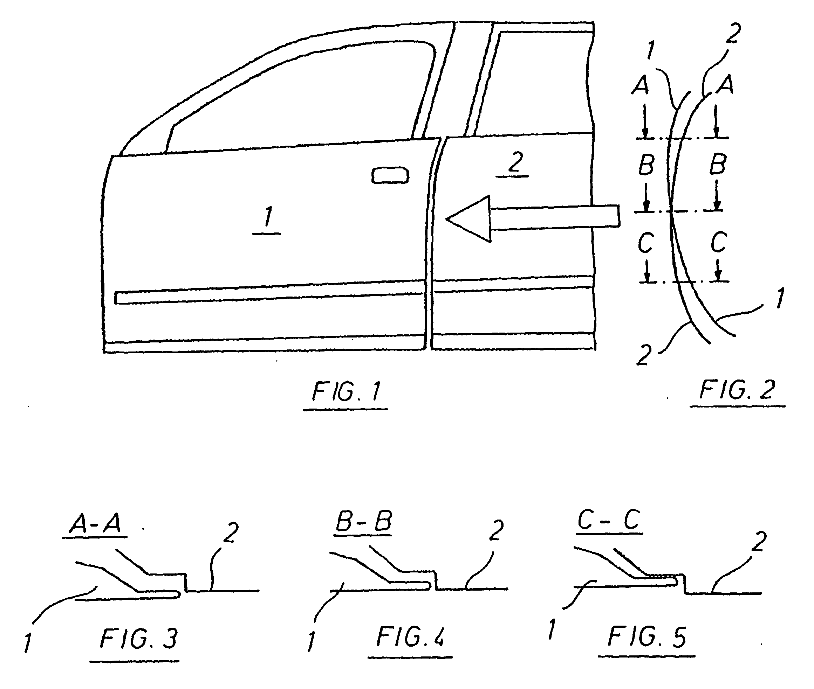

In der Fig. 1 ist schematisch eine Seitenansicht eines Kraftfahrzeuges im Bereich einer vorderen Fahrzeugtür 1 und einer daran anschließenden hinteren Fahrzeugtüre 2 gezeigt. Allgemein sollen nach der Montage die beiden Fahrzeugtüren 1, 2 außenhautbündig mit einem gleichmäßigen Fugenbild zwischen den beiden Fahrzeugtüren 1, 2 justiert sein. Dies ist in der Regel durch eine hohe Fertigungsgenauigkeit der Fahrzeugtüren 1, 2 bzw. auch der angrenzenden Karosserieteile im Falle von lediglich einer Fahrzeugtür auf einer Fahrzeugseite gegeben oder wird durch entsprechende Einstellmittel an den Scharnierelementen erreicht. Dennoch weisen, wie dies in der Fig. 2 lediglich äußerst schematisch und beispielhaft dargestellt ist, in der Serienfertigung einige Fahrzeugtüren Verdrehungen auf, die dazu führen, dass sie nach der Montage nicht außenhautbündig an die angrenzende hintere Fahrzeugtüre 2 anschließen. In den Fig. 3 bis 5 sind unterschiedliche Schnittdarstellungen der Fig. 2 gezeigt, die diese Problematik nochmals in einer anderen Perspektive verdeutlichen.

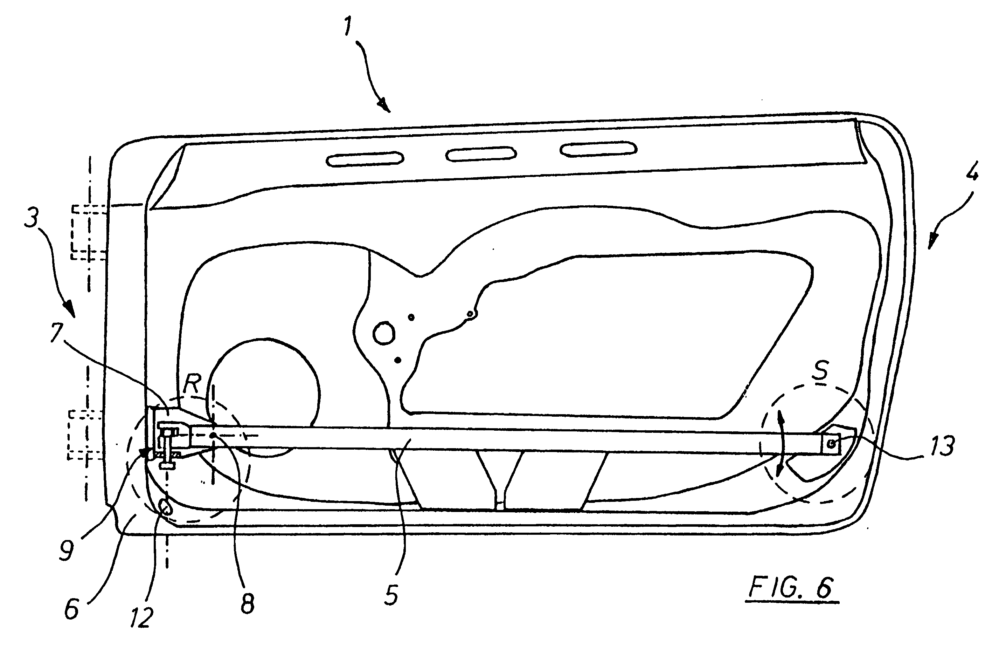

Um hier die erforderliche Außenhautbündigkeit herstellen zu können, muss die Fahrzeugtüre 1 ausgerichtet werden können. Dazu weist die Fahrzeugtüre 1 den nachfolgend näher erläuterten erfindungsgemäßen Aufbau, wie in Fig. 6 gezeigt, auf:

Die Fahrzeugtüre 1 ist mit einer Scharnierseite 3 und einer der Scharnierseite 3 gegenüberliegenden Schlossseite 4 ausgebildet. Im Bereich der Scharnierseite 3 sind erste Türscharnierelemente angeordnet, die hier strichliert dargestellt sind und die im angeschlagenen Zustand der Fahrzeugtüre 1 mit karosserieseitigen im Türausschnittbereich angeordneten Gegenelementen als zweite Türscharnierelemente schwenkbar verbunden werden. Auf der Schlossseite 4 ist ein erstes Schlosselement angeordnet, was hier nicht dargestellt ist, das mit einem im Bereich des Türausschnitts angeordneten zweiten Schlosselement zusammenwirkt.

In der Fahrzeugtüre 1 ist ein Aufprallträger 5 angeordnet, der sich horizontal von der Scharnierseite 3 bis zur Schlossseite 4 erstreckt. Eine scharnierseitige Befestigungsvorrichtung 6 umfasst eine etwa senkrecht zur Türfläche ausgerichtete und mit einem Türkastenteil 7 fest verbundene Schwenkachse 8, an der der Aufprallträger 5 als Hebel in einem Einstellbereich schwenkbar gelagert ist. Zudem ist an der scharnierseitigen Befestigungsvorrichtung 6 eine selbsthemmende Spindelvorrichtung 9 als Verstelleinrichtung ausgebildet. Die Spindelvorrichtung 9 weist eine senkrecht ausgerichtete Stellschraube 10 als Einstellelement mit einem nach unten weisenden Werkzeugansatz auf, die in einer mit dem Türkastenteil 7 fest verbundenen Führung 11 für eine Verstellung des Aufprallträgers 5 geführt ist. Das dem Werkzeugansatz gegenüberliegende Ende der Stellschraube 10 greift formschlüssig in ein Profil des Aufprallträgers 5 für eine Verstellung in Fahrzeughochrichtung ein.

Die Schwenkachse 8 ist am schlossseitigen Aufprallträgerende versetzt zur Spindelvorrichtung 9 angebracht, so dass eine zweiseitige Hebelanordnung ausgebildet ist. Der Aufprallträger 5 ist von der Schwenkachse 8 in Richtung der Scharnierseite 3 mit einem Teilbereich als kurzem Hebelarm geführt, so dass von der Schwenkachse 8 in Richtung Schlossseite 4 der lange Hebelarm mit einem zweiten Teilbereich des Aufprallträgers 5 gebildet ist.

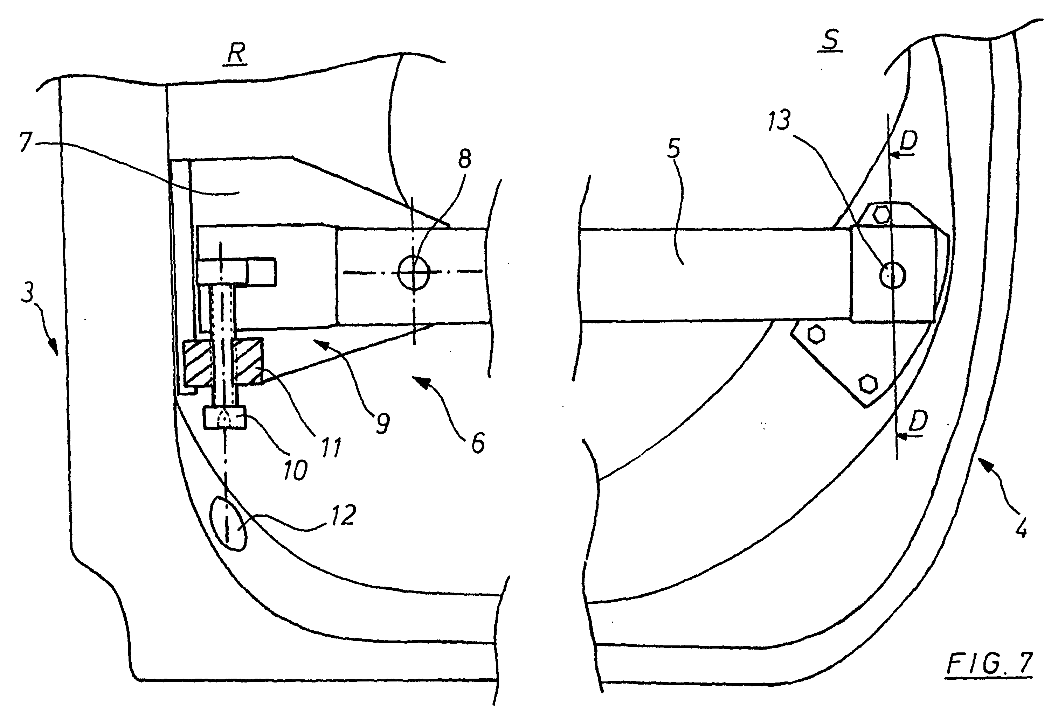

In Fig. 7 sind schematisch Vergrößerungen der Einzelheiten R und S von Fig. 6 dargestellt. Auf der Scharnierseite 3 ist die scharnierseitige Befestigungsvor richtung 6 angeordnet, die ein fest mit der Fahrzeugtür 1 verbundenes Türkastenteil 7 aufweist. Am Türkastenteil 7 ist die Führung 11 ortsfest angebunden, in der die Stellschraube 10 verstellbar geführt ist. Die Stellschraube 10 ist mit dem Aufprallträger 5 verbunden, so dass bei einer Verstellung der Stellschraube 10 in der Führung 11 der Aufprallträger 5 mit seinem der Scharnierseite 3 zugeordneten Ende verstellbar ist. Ein Einstellwerkzeug kann durch eine Öffnung 12 im Türblech der Fahrzeugtür 1 von unten her eingeführt werden. Versetzt zu der Spindelvorrichtung 9, die durch die Stellschraube 10 und die Führung 11 gebildet ist, ist die Schwenkachse 8 angeordnet, so dass in einem Einstellbereich ein Verschwenken des Aufprallträgers 5 um die Schwenkachse 8 bei einem Verstellen der Stellschraube 10 erfolgt. Am Ende des Aufprallträgers 5 an der Schlossseite 4 der Fahrzeugtür 1 ist dieser mittels einer festen Trägerverbindung 13 mit der Fahrzeugtür 1 verbunden, so dass bei einer Schwenkverstellung des Aufprallträgers 5 durch Hebelwirkung über die schlossseitige feste Trägerverbindung 13 eine Verspannung der Fahrzeugtür 1 und somit eine Türausrichtung mit einer Justierung der Türverdrehung erfolgt.

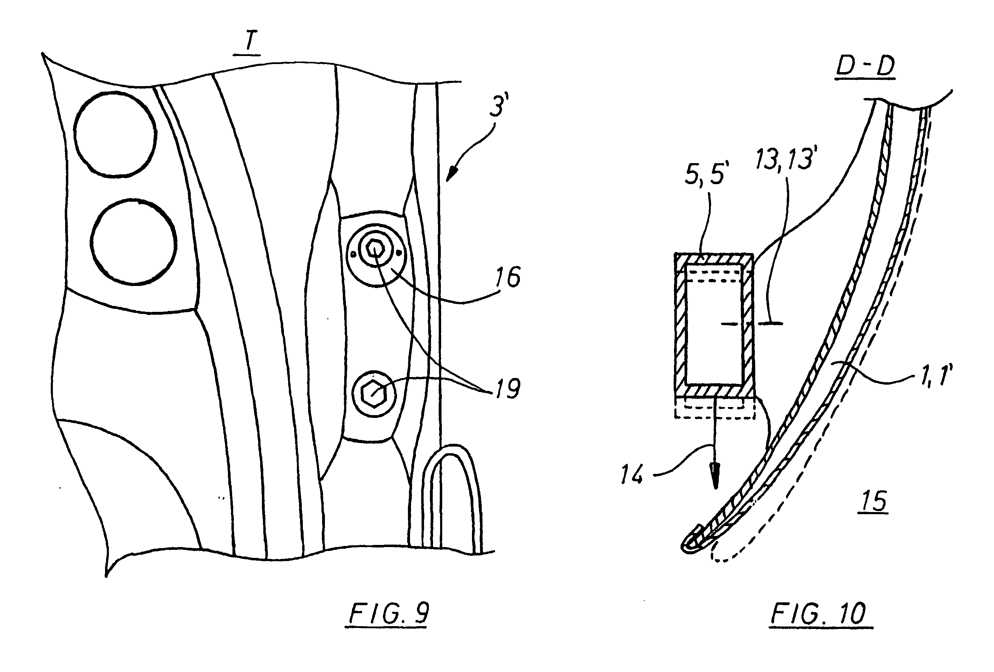

In Fig. 10 ist schematisch eine Schnittdarstellung des Schnittes D-D von Fig. 7 dargestellt. Dabei ist die feste Trägerverbindung 13 zwischen dem Aufprallträger 5 und der Fahrzeugtür 1 auf der Schlossseite 4 zu erkennen. Mit durchgezogenen Linien ist der Ausgangszustand vor einer Verstellung bzw. Türausrichtung dargestellt. Bei einer Verstellung der Stellschraube 10 wird über den Aufprallträger 5 als Hebel eine in Fahrzeughochrichtung ausgerichtete Kraft übertragen, wobei in Fig. 10 beispielhaft mit einem Kraftpfeil 14 eine nach unten wirkende Kraft eingezeichnet ist. Aufgrund dieser Krafteinwirkung wird in der Fahrzeugtür 1 eine Verspannung dergestalt hervorgerufen, dass die Fahrzeugtür nach unten und zur Fahrzeugaußenseite 15 hin ausgerichtet wird. Dies ist beispielhaft und schematisch strichliert in Fig. 10 eingezeichnet.

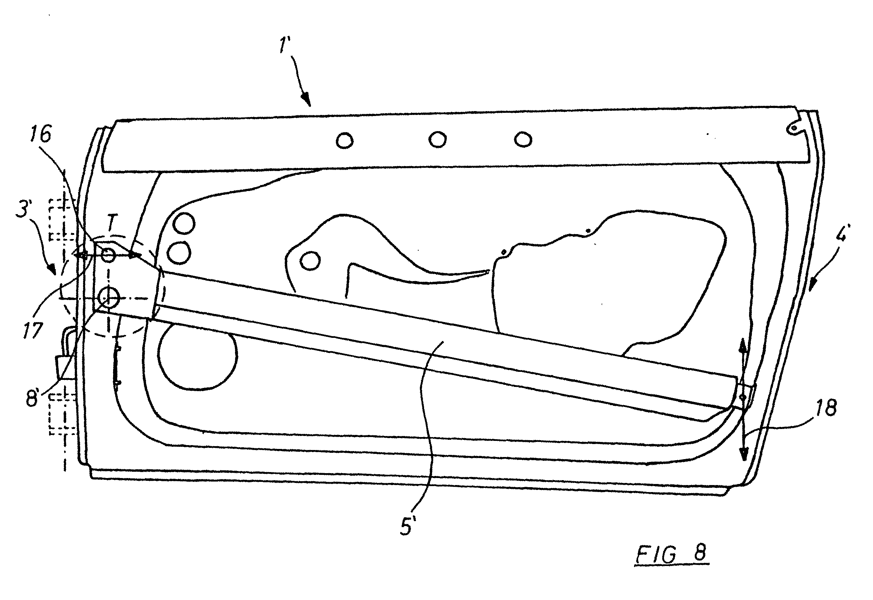

In Fig. 8 ist schematisch eine vordere Fahrzeugtür 1' mit einer alternativen Ausführung eines Aufprallträgers 5' dargestellt. Der Grundaufbau mit Scharnierseite 3' und Schlossseite 4' entspricht dem der Fahrzeugtür 1 von Fig. 6. Der Aufprallträger 5' ist hier als Winkelhebel ausgebildet, wobei der Aufprallträger 5' von einer Schwenkachse 8' nach oben mit einem Teilbereich als kurzen Hebelarm absteht, an dessen Ende die Verbindung zu einem Excenterelement 16 als Einstellelement hergestellt ist. Am der Schlossseite 4' zugeordneten Ende des Aufprallträgers 5' ist eine feste Trägerverbindung 13' zwischen dem Aufprallträger 5' und der Fahrzeugtüre 1' ausgebildet. Bei einer Verstellung des Exzenterelements 16 erfolgt eine Bewegung in Richtung des Doppelpfeiles 17, die weitestgehend in Fahrzeuglängsrichtung ausgerichtet ist, wodurch durch die Hebelwirkung des Aufprallträgers 5' und einem damit verbundenen Verschwenken des Aufprallträgers 5' um die Schwenkachse 8' eine in Fahrzeughochrichtung ausgerichtete Kraft, die mit dem Doppelpfeil 18 eingezeichnet ist, am der Schlossseite 4' zugeordneten Ende des Aufprallträgers 5' resultiert.

In Fig. 9 ist schematisch eine Vergrößerung der Einzelheit T von Fig. 8 dargestellt, wobei die Blickrichtung um 180° gedreht ist, so dass auf die Türinnenseite geblickt wird. Dabei ist das Exzenterelement 16 zu erkennen, mittels dem die Einstellung bzw. Verspannung und Türausrichtung der Fahrzeugtür 1' vollzogen werden kann. An einer unterhalb des Exzenterelements 16 angeordneten Passschraube 19 ist auf der der Fahrzeugaußenseite zugeordneten Fahrzeugtürseite die Schwenkachse 8', um die der Aufprallträger 5' als Winkelhebel schwenkbar ist, ausgebildet.

Bei beiden alternativen Ausführungsvarianten, die in der Fig. 6 und 8 dargestellt sind, wird am der Schlossseite 4, 4' zugeordneten Ende des Aufprallträgers 5, 5' beim Einstellen und Ausrichten der Fahrzeugtüre 1, 1' eine Kraft in Fahrzeughochrichtung erhalten, so dass die schematische Darstellung des Schnittes D-D in Fig. 10 für beide Ausführungsvarianten zutreffend ist.

## Patentansprüche

1. Fahrzeugtür, insbesondere Kraftfahrzeugtür,
mit einem in der Fahrzeugfür angeordneten, biegesteifen Aufprallträger (5, 5'), der sich von einem scharnierseitigen Türbereich (3) bis in einem schlossseitigen Türbereich (4) der Fahrzeugtür erstreckt und
mit einer scharnierseitigen Befestigungsvorrichtung (6) zur Verbindung eines zugeordneten scharnierseitigen Trägerendbereichs und einer festen Trägerverbindung eines schlossseitigen Trägerendbereichs mit jeweils einem Türkastenteil (7),
**dadurch gekennzeichnet,**
**dass** die scharnierseitige Befestigungsvorrichtung (6) eine etwa senkrecht zur Türfläche ausgerichtete und mit einem Türkastenteil (7) fest verbundene Schwenkachse (8, 8') umfasst, an der der Aufprallträger (5, 5') als Hebel in einem Einstellbereich schwenkbar gelagert ist, und
**dass** die scharnierseitige Befestigungsvorrichtung (6) weiter eine Verstelleinrichtung (9, 16) aufweist, mit einem Einstellelement (10), das sich einerseits an einem Türkastenteil fest abstützt und andererseits mit dem Aufprallträger (5, 5') für eine Schwenkverstellung und Schwenklagefixierung verbunden ist, dergestalt, dass bei einer Schwenkverstellung des Aufprallträgers (5, 5') durch Hebelwirkung über die schlossseitige feste Trägerverbindung (13, 13') eine Verspannung und Türausrichtung erfolgt.

2. Fahrzeugtür nach Anspruch 1, **dadurch gekennzeichnet, dass** die Schwenkachse (8, 8') versetzt zum schlossseitigen Trägerende angebracht ist und das Einstellelement (10, 16) mit diesem Trägerende zur Ausbildung einer zweiseitigen Hebelanordnung verbunden ist.

3. Fahrzeugtür nach Anspruch 2, **dadurch gekennzeichnet, dass** der Aufprallträger (5) etwa geradlinig ausgebildet ist, wobei der Aufprallträger (5) von der Schwenkachse (8) in Scharnierrichtung mit einem Teilbereich als kurzem Hebelarm geführt ist, mit dessen Ende das Einstellelement (10) verbunden ist.

4. Fahrzeugtür nach Anspruch 3, **dadurch gekennzeichnet, dass** die Verstelleinrichtung eine selbsthemmende Spindelvorrichtung (9) ist, mit einer etwa senkrecht ausgerichteten Stellschraube (10) als Einstellelement mit nach unten weisendem Werkzeugansatz, wobei ggf. in einem darunterliegenden Türblech eine Öffnung (12) zur Einführung eines Einstellwerkzeugs vorgesehen ist.

5. Fahrzeugtür nach Anspruch 2, **dadurch gekennzeichnet, dass** der Aufprallträger (5') als Winkelhebel ausgebildet ist, wobei der Aufprallträger (5') von der Schwenkachse (8') nach oben mit einem Teilbereich als kurzem Hebelarm absteht, an dessen Ende die Verbindung zum Einstellelement (16) hergestellt ist.

6. Fahrzeugtür nach Anspruch 5, **dadurch gekennzeichnet, dass** die Verstelleinrichtung eine Exzentervorrichtung ist, mit einem Exzenterelement (16) als Einstellelement, dessen Exzenterachse etwa senkrecht zur Türebene verläuft und das einen von der Türinnenseite zugänglichen Werkzeugansatz aufweist.

7. Fahrzeugtür nach einem der Ansprüche 1 bis 6, **dadurch gekennzeichnet, dass** der Aufprallträger (5) etwa horizontal im unteren Drittel des Türkastens angeordnet ist.

8. Fahrzeugtür nach einem der Ansprüche 1 bis 6, **dadurch gekennzeichnet, dass** sich der Aufprallträger (5') von einem scharnierseitig höheren Bereich zu einem schlossseitig unteren Bereich im unteren Drittel des Türkastens erstreckt.

## Claims

1. Vehicle door, in particular motor vehicle door,
with an impact absorber (5, 5'), which is resistant to bending, arranged in the vehicle door, which extends from an area of the door on the hinge side (3) into an area of the door on the lock side (4) of the vehicle door and
with a fastening device (6) on the hinge side for connecting an allocated area of the end of the absorber on the hinge side and a fixed absorber connection of an area of the end of the absorber on the lock side to a part of the door frame (7),
**characterised by** the fact,
that the fastening device (6) on the hinge side comprises a swivel axis (8, 8') firmly connected to part of the door frame (7), which is aligned more or less vertically to the door surface, on which the impact absorber (5, 5') is supported so that it can swivel as a lever in a setting area and
the fastening device (6) on the hinge side also has an adjusting device (9, 16) with a setting element (10), which is firmly supported on part of the door frame on one side and on the other side is connected to the impact absorber (5, 5') for adjusting the swivel and fixing the swivel position, in such a way that when the swivel of the impact absorber (5, 5') is adjusted by the effect of the lever through the fixed absorber connection (13, 13') on the lock side the door is braced and straightened.

2. Vehicle door according to claim 1, **characterised by** the fact that the swivel axis (8, 8') is arranged offset to the end of the absorber on the lock side and the setting element (10, 16) is connected to this end of the absorber to form a double sided lever arrangement.

3. Vehicle door according to claim 2, **characterised by** the fact that the impact absorber (5) is made more or less in a straight line, in which the impact absorber (5) is made with part of the area as a short lever arm from the swivel axis (8) in the direction of the hinge, with the end of which the setting element (10) is connected.

4. Vehicle door according to claim 3, **characterised by** the fact that the adjusting device is a spindle device (9), which is retained by friction, with an adjusting screw (10) arranged more or less vertically as a setting element with a tool attachment facing down, in which if necessary there is an opening (12) in a door plate underneath for introducing a setting tool.

5. Vehicle door according to claim 2, **characterised by** the fact that the impact absorber (5') is made as an angle lever, in which the impact absorber (5') sticks out from the swivel axis (8') upwards with part of the area as a short lever arm, on the end of which the connection to the setting element (16) is produced.

6. Vehicle door according to claim 5, **characterised by** the fact that the adjusting device is an eccentric device, with an eccentric element (16) as a setting element, the eccentric axis of which runs more or less vertically to the door level and which has a tool attachment which is accessible from the inside of the door.

7. Vehicle door according to claims 1 to 6, **characterised by** the fact that the impact absorber (5) is arranged more or less horizontally in the bottom third of the door frame.

8. Vehicle door according to one of claims 1 to 6, **characterised by** the fact that the impact absorber (5') extends from a top area on the hinge side to a bottom area on the lock side in the bottom third of the door frame.

## Revendications

1. Porte de véhicule, notamment porte de véhicule automobile comprenant
un support d'impacts (5, 5') rigide à la flexion, logé dans la porte de véhicule et s'étendant depuis une zone (3) de la porte de véhicule située côté charnières, jusqu'à une zone (4) de ladite porte située côté serrure, et
un dispositif de fixation (6) situé côté charnières et destiné à relier, à une partie respective (7) du caisson de la porte, une région extrême associée du support qui est située côté charnières, et une liaison rigide d'une région extrême dudit support qui est située côté serrure,
**caractérisée par le fait**
**que** le dispositif de fixation (6) situé côté charnières comprend un axe de pivotement (8, 8') qui est orienté à peu près perpendiculairement à la surface de la porte, est relié rigidement à une partie (7) du caisson de ladite porte, et sur lequel le support d'impacts (5, 5') est monté pivotant sous la forme d'un levier, dans une zone de réglage ; et
par le fait que ledit dispositif de fixation (6) situé côté charnières présente, en outre, un système d'ajustement (9, 16) muni d'un élément de réglage (10) qui, d'une part, prend rigidement appui contre une partie du caisson de la porte et est, d'autre part, relié au support d'impacts (5, 5') en vue d'un ajustement pivotant et d'une fixation de la position prise par pivotement, de façon telle qu'un blocage et une orientation de la porte s'opèrent lors d'un ajustement pivotant dudit support d'impacts (5, 5'), par effet de levier, par l'intermédiaire de la liaison rigide (13, 13') dudit support située côté serrure.

2. Porte de véhicule, selon la revendication 1, **caractérisée par le fait que** l'axe de pivotement (8, 8') occupe une position décalée vis-à-vis de l'extrémité du support située côté serrure, et l'élément de réglage (10, 16) est relié à cette extrémité du support, en vue de former un ensemble bilatéral de leviers.

3. Porte de véhicule, selon la revendication 2, **caractérisée par le fait que** le support d'impacts (5) est de réalisation sensiblement rectiligne, ledit support d'impacts (5) s'étendant depuis l'axe de pivotement (8), en direction des charnières, par une région partielle revêtant la forme d'un bras de levier court à l'extrémité duquel l'élément de réglage (10) est relié.

4. Porte de véhicule, selon la revendication 3, **caractérisée par le fait que** le système d'ajustement est un dispositif à broches (9) exerçant un effet d'autoblocage et comportant, en tant qu'élément de réglage, une vis de réglage (10) orientée à peu près verticalement et pourvue d'un appendice tourné vers le bas et permettant l'engagement d'un outil, un orifice (12) étant éventuellement prévu, dans une tôle sous-jacente de la porte, pour l'introduction d'un outil de réglage.

5. Porte de véhicule, selon la revendication 2, **caractérisée par le fait que** le support d'impacts (5') est réalisé sous la forme d'un levier coudé, ledit support d'impacts (5') saillant vers le haut, depuis l'axe de pivotement (8'), par une région partielle revêtant la forme d'un bras de levier court à l'extrémité duquel la liaison avec l'élément de réglage (16)'est établie.

6. Porte de véhicule, selon la revendication 5,
**caractérisée par le fait que** le système d'ajustement est un dispositif à excentrique comportant, en tant qu'élément de réglage, un élément excentré (16) dont l'axe s'étend à peu près perpendiculairement au plan de la porte, et qui présente un appendice d'engagement d'un outil, accessible depuis la face intérieure de ladite porte.

7. Porte de véhicule, selon l'une des revendications 1 à 6, **caractérisée par le fait que** le support d'impacts (5) occupe une position sensiblement horizontale dans le tiers inférieur du caisson de ladite porte.

8. Porte de véhicule, selon l'une des revendications 1 à 6, **caractérisée par le fait que** le support d'impacts (5') s'étend, depuis une région rehaussée côté charnières jusqu'à une région inférieure côté serrure dans le tiers inférieur de caisson de porte.
